# EUROPEAN PATENT APPLICATION

(11) **EP 4 585 437 A1**
(43) Date of publication of application: **16.07.2025**
(21) Application number: 23862946.3
(22) Date of filing: 24.08.2023
(51) Int. Cl.: B60K 1/04, B60K 6/24, B60K 6/405, B60K 6/46, B60K 11/06, B60K 15/063, B61C 5/00, B61C 5/02, F01M 1/02, F01P 7/02, F02D 19/02, F02M 21/02

(54) **MOVING OBJECT AND MAINTENANCE METHOD**

(30) Priority: 05.09.2022 JP 2022140954
(71) Applicant: Kawasaki Motors, Ltd., Akashi, Hyogo 673-8666 (JP)
(72) Inventor: MATSUDA, Yoshimoto, Akashi-shi, Hyogo 673-8666 (JP)
(74) Representative: Witte, Weller & Partner Patentanwälte mbB
(86) International application number: PCT/JP2023/030445
(87) International publication number: WO 2024/053407

(57) **Abstract**

A movable body includes: a rotating body that generates advancing power; a movable body main body that rotatably supports the rotating body; an electric motor that is supplied with electric power to rotate the rotating body; and at least one electric power generating unit including an internal combustion engine, an electric power generator that generates the electric power by an output of the internal combustion engine, and a support structural body that supports the internal combustion engine and the electric power generator and is attachable to and detachable from the movable body main body while keeping supporting both of the internal combustion engine and the electric power generator.

## Description

### Technical Field

### Cross-Reference to Related Application

This application claims priority to and the benefit of Japanese Patent Application No. 2022-140954 filed on September 5, 2022, the entire disclosure of which is incorporated herein by reference.

### Field

The present disclosure relates to a movable body including an internal combustion engine and a maintenance method.

### Background Art

A movable body including an internal combustion engine has been known. For example, PTL 1 discloses a car which includes an internal combustion engine capable of operating by using hydrogen as fuel and advances when the rotation of an output shaft by the internal combustion engine is transmitted to a driving wheel.

### Citation List

### Patent Literature

PTL 1: Japanese Laid-Open Patent Application Publication No. 2008-038680

### Summary of Invention

### Technical Problem

When there is an abnormality in an internal combustion engine, or when performing maintenance work, such as periodic inspection, the activity of a movable body including the internal combustion engine is stopped.

An object of one aspect of the present disclosure is to provide a movable body and a maintenance method each of which facilitates the restart of the activity of the movable body.

### Solution to Problem

A movable body according to one aspect of the present disclosure includes: a rotating body that generates advancing power; a movable body main body that rotatably supports the rotating body; an electric motor that is supplied with electric power to rotate the rotating body; and at least one electric power generating unit including an internal combustion engine, an electric power generator that generates the electric power by an output of the internal combustion engine, and a support structural body that supports the internal combustion engine and the electric power generator and is attachable to and detachable from the movable body main body while keeping supporting both of the internal combustion engine and the electric power generator.

A maintenance method according to one aspect of the present disclosure is a maintenance method of maintaining a movable body, the movable body including: a movable body main body; an electric motor for advancing; and a unit including an internal combustion engine and an electric power generator that generates electric power by an output of the internal combustion engine, the maintenance method including: detaching from the movable body a not-yet-maintained unit that is the unit mounted on the movable body; attaching an already-maintained unit to the movable body, the already-maintained unit being different from the not-yet-maintained unit and being the unit which has already been subjected to maintenance; and terminating maintenance work of the movable body.

### Advantageous Effects of Invention

One aspect of the present disclosure can provide the movable body and the maintenance method each of which facilitates the restart of the activity of the movable body.

### Brief Description of Drawings

FIG. 1 is a schematic side view showing a train set that is a movable body according to one embodiment.
FIG. 2 is a block diagram showing a drive system of the movable body of FIG. 1.
FIG. 3A is a schematic perspective view showing one example of an electric power generating unit. FIG. 3B is a schematic perspective view showing another example of the electric power generating unit.
FIG. 4 is a schematic plan view showing an upper portion of a motor car of FIG. 1.
FIG. 5 is a schematic front sectional view taken along line VI-VI of FIG. 4.
FIG. 6 is a block diagram showing the flow of information in the drive system of the movable body.
FIG. 7 is a table showing, as one example, contents of control commands transmitted to internal combustion engines in the electric power generating units and output electric powers corresponding to the control commands.
FIG. 8 is a table showing unit identification information, temperature information corresponding to the unit identification information, and maintenance information corresponding to the unit identification information.
FIG. 9 shows one example of a fuel consumption rate map of the internal combustion engine for explaining a control method of an integration ECU.
FIG. 10 is a diagram for explaining a maintenance method of the motor car.
FIG. 11 is a schematic side view of the movable body according to Modified Example 1.
FIG. 12 is a schematic side view of the movable body according to Modified Example 2.

### Description of Embodiments

Hereinafter, an embodiment will be described with reference to the drawings.

### Entire Configuration of Movable Body

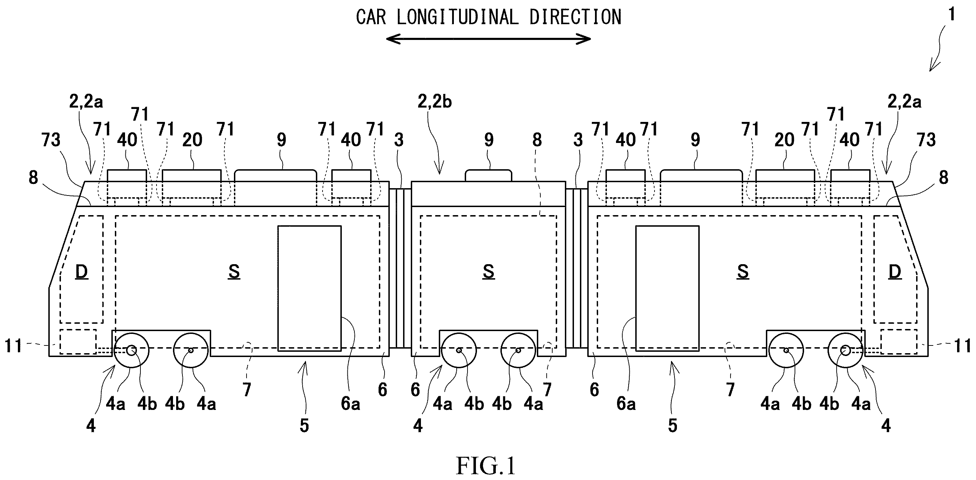

FIG. 1 is a schematic side view showing a movable body according to one embodiment. In the present embodiment, a train set 1 including track cars 2 is described as the movable body. The train set 1 is a low-floor train, such as a streetcar.

The train set 1 includes: two motor cars 2a as first and third cars; and a trail-car 2b as a second car coupled to the two motor cars 2a. Each motor car 2a includes at least one electric motor 11 as an advancing power generator. The trail-car 2b does not include the advancing power generator and is towed or advanced by the motor car 2a. Each of the two motor cars 2a are the first and third cars includes a driver's cab D. The motor cars 2a and the trail-car 2b are passenger cars. Each of the motor cars 2a and the trail-car 2b includes a passenger room (accommodating space) S accommodating occupants. The passenger rooms S of the two adjacent cars 2 are coupled to each other by a coupling passage with a cover 3. When the motor cars 2a and the trail-car 2b are not distinguished from each other in the following description, each of the motor cars 2a and the trail-car 2b is called the car 2.

Each car 2 includes a bogie 4 and a carbody 5 supported by the bogie 4. The bogie 4 includes wheels 4a and axles 4b connected to the wheels 4a. Each axle 4b couples two wheels 4a which are lined up so as to be spaced apart from each other in a car width direction. However, the bogie 4 may be of an independently rotating wheel type in which two wheels 4a are not coupled to each other by the axle 4b. The bogie 4 supports the carbody 5 through, for example, a secondary spring. The wheel 4a is one example of a rotating body that generates advancing power. A combination of the bogie 4 and the carbody 5 is one example of a movable body main body that rotatably supports the wheel 4a that is the rotating body.

The carbody 5 of each car 2 includes side walls 6, a floor 7, and a roof 8. The side walls 6 are opposed to each other in the car width direction so as to sandwich the passenger room S in the car width direction. The floor 7 is located at a lower side of the passenger room S. The roof 8 is located at an upper side of the passenger room S. Each side wall 6 includes an entrance 6a. Each car 2 is of a low-floor type. To be specific, the height of a floor surface of the passenger room S, i.e., the height of an upper surface of the floor 7 is 400 mm or less, preferably 350 mm or less. An air conditioner 9 that adjusts air in the passenger room S is located at the roof 8.

An output shaft of each electric motor 11 is coupled to at least one wheel 4a through a power transmitting structure. The electric motor 11 is located at a height substantially equal to the height of the wheel 4a. In the present embodiment, the motor car 2a adopts a carbody-mounted Cardan driving system. To be specific, the electric motor 11 is fixed to the carbody 5 of the motor car 2a. However, the electric motor 11 may be fixed to the bogie 4 of the motor car 2a.

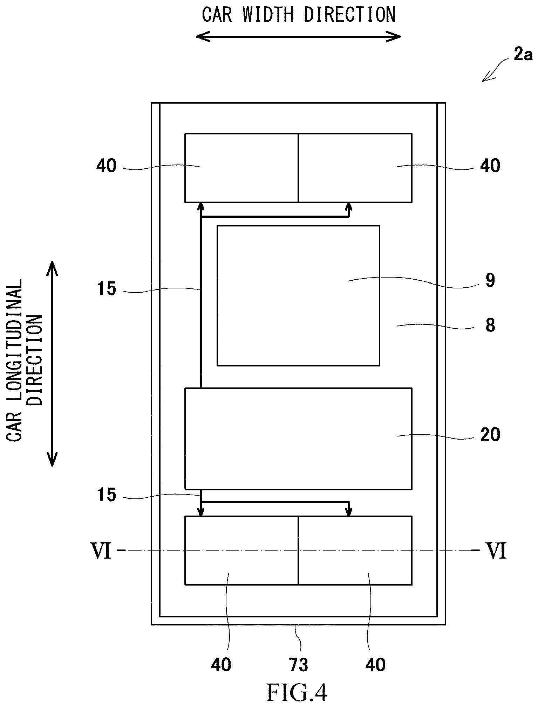

Each motor car 2a includes four electric power generating units 40 and one fuel supply unit 20 (also see FIG. 4). The electric power generating unit 40 uses the supplied fuel to generate electric power to be supplied to the electric motor 11. The fuel supply unit 20 supplies the fuel, necessary to generate the electric power, to the electric power generating unit 40. In the present embodiment, the electric power generating unit 40 includes an internal combustion engine 41 and an electric power generator 43. The internal combustion engine 41 is supplied with the fuel to generate driving force. The electric power generator 43 receives the driving force from the internal combustion engine 41 to generate the electric power.

### Drive System

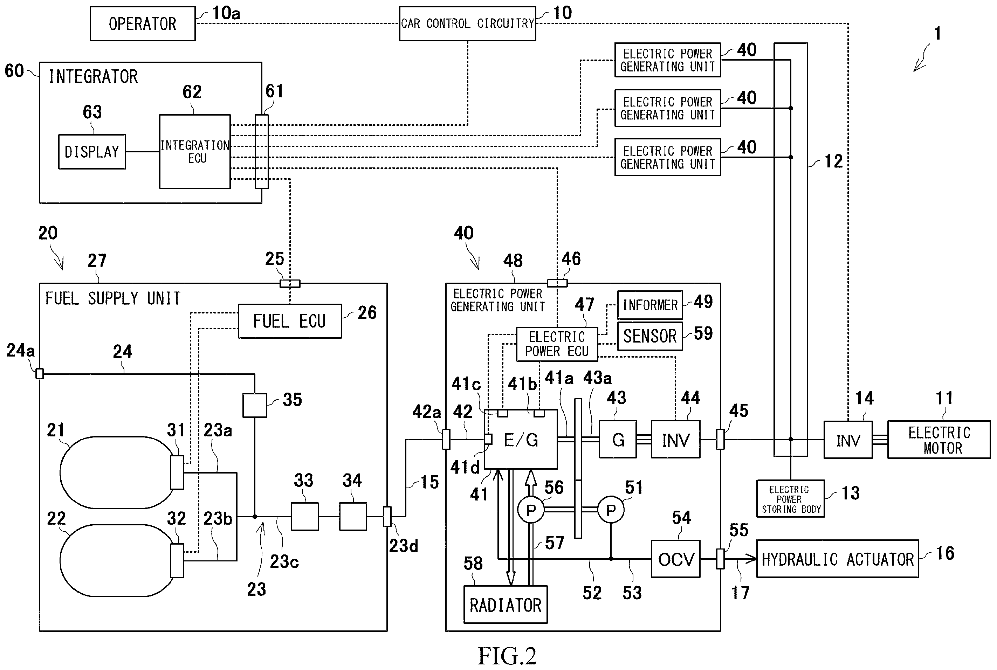

A drive system that drives the electric motor 11 of the motor car 2a will be described with reference to FIG. 2. FIG. 2 is a block diagram showing the drive system that drives the electric motor 11. As shown in FIG. 2, the drive system includes car control circuitry 10, the electric motor 11, electric power collecting circuitry 12, an electric power storing body 13, an inverter 14, one fuel supply unit 20, four electric power generating units 40, and an integrator 60.

The car control circuitry 10 is configured to be communicable with an operator 10a. The operator 10a includes one or more levers or one or more handles located at the driver's cab D. A requirement command is transmitted from the operator 10a to the car control circuitry 10 in accordance with an operation input of a driver with respect to the operator 10a. The requirement command includes a traveling command and a braking command. The operator 10a includes: a traveling operator to which the traveling command is input; a braking operator to which the braking command is input; and the like. The traveling operator may be located separately from the braking operator or may be integrated with the braking operator.

Based on the requirement command received from the operator 10a, the car control circuitry 10 generates an output command for controlling the electric motor 11. The car control circuitry 10 transmits the output command to the inverter 14 that controls the output of the electric motor 11. The electric power necessary to drive the electric motor 11 is supplied from at least one electric power generating unit 40.

The car control circuitry 10 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program.

The electric motor 11 generates traveling power and drives the wheel 4a of the motor car 2a.

The electric power generating units 40 mounted on the motor car 2a are electrically connected to the electric power collecting circuitry 12 through, for example, an electric cable in parallel. The electric power collecting circuitry 12 collects the electric power generated by the electric power generating units 40.

The electric power generating units 40 are electrically connected to the electric power storing body 13 through the electric power collecting circuitry 12. The electric power storing body 13 stores the electric power generated by the electric power generating units 40. The electric power storing body 13 is, for example, a battery or a capacitor. Moreover, the electric power storing body 13 is electrically connected to the electric motor 11 through the inverter 14.

The inverter 14 converts DC power into AC power, adjusts the voltage of the AC power, and supplies the AC power to the electric motor 11. The inverter 14 controls the output of the electric motor 11 by the output command transmitted from the car control circuitry 10.

The electric power generating unit 40 includes the internal combustion engine 41 that uses a hydrogen gas as the fuel. The fuel supply unit 20 supplies the hydrogen gas as the fuel to the internal combustion engine 41 of the electric power generating unit 40. Hereinafter, details of the fuel supply unit 20 and the electric power generating unit 40 will be described.

### Configuration of Fuel Supply Unit

The fuel supply unit 20 includes a first fuel tank 21, a second fuel tank 22, a supply pipe 23, a filling pipe 24, a communication interface 25, fuel control circuitry 26, a support structural body 27, and the like. The fuel control circuitry 26 is also called a fuel ECU (Electronic Control Unit) 26.

The first fuel tank 21 and the second fuel tank 22 are the same in structure as each other. The first fuel tank 21 and the second fuel tank 22 store the hydrogen gas as a fuel gas in a compressed state. Each of internal pressure of the first fuel tank 21 in a full state and internal pressure of the second fuel tank 22 in a full state is higher than atmospheric pressure, specifically higher than predetermined intake pressure of the internal combustion engine 41.

A first on-off valve 31 is located at the first fuel tank 21 and opens and closes a port of the first fuel tank 21. A second on-off valve 32 is located at the second fuel tank 22 and opens and closes a port of the second fuel tank 22. The first on-off valve 31 and the second on-off valve 32 are electromagnetic valves that are electrically controllable.

The supply pipe 23 guides the fuel from the first fuel tank 21 and the second fuel tank 22 to the electric power generating unit 40. Two upstream end portions of the supply pipe 23 are connected to the first fuel tank 21 and the second fuel tank 22. Moreover, one downstream end portion of the supply pipe 23 includes a supply port 23d.

More specifically, the supply pipe 23 includes a first sub-supply pipe 23a, a second sub-supply pipe 23b, and a main supply pipe 23c. The first sub-supply pipe 23a connects the first fuel tank 21 to the main supply pipe 23c. The second sub-supply pipe 23b connects the second fuel tank 22 to the main supply pipe 23c. To be specific, the first sub-supply pipe 23a and the second sub-supply pipe 23b extend from the main supply pipe 23c at an upstream portion of the main supply pipe 23c. A downstream end portion of the main supply pipe 23c includes the supply port 23d.

A pressure reducing valve 33 is located at the main supply pipe 23c. The pressure reducing valve 33 reduces the pressure of the hydrogen gas, which flows through the main supply pipe 23c, such that the pressure of the hydrogen gas to be supplied from the main supply pipe 23c to the internal combustion engine 41 is maintained at the predetermined intake pressure.

A shutoff valve 34 is located at a portion of the main supply pipe 23c which is located downstream of the pressure reducing valve 33. The shutoff valve 34 is located at the main supply pipe 23c so as to be able to shut off the supply of the hydrogen gas from the main supply pipe 23c to the internal combustion engine 41 in an emergency, for example.

The filling pipe 24 is a pipe through which the fuel is guided from an outside to the first fuel tank 21 and the second fuel tank 22. One end portion of the filling pipe 24 is connected to a portion of the main supply pipe 23c which is located upstream of the pressure reducing valve 33. The other end portion of the filling pipe 24 includes a filling port 24a. A check valve 35 is located at the filling pipe 24 and prevents the fuel from flowing toward the filling port 24a.

The communication interface 25 connects the fuel ECU 26 to the integrator 60, located outside the fuel supply unit 20, such that the fuel ECU 26 is communicable with the integrator 60. In the case of wired communication, the communication interface 25 is a detachable terminal or a detachable communication connector. In the case of wireless communication, the communication interface 25 is a known wireless communicator.

The fuel ECU 26 controls the first on-off valve 31 and the second on-off valve 32 based on a signal received from the integrator 60 through the communication interface 25. The fuel ECU 26 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program.

The components 21, 22, 23, 24, 25, 26, 31, 32, 33, 34, and 35 included in the fuel supply unit 20 are fixed to each other and integrated with each other. Specifically, the components 21, 22, 23, 24, 25, 26, 31, 32, 33, 34, and 35 included in the fuel supply unit 20 are supported by the support structural body 27 and are combined as a unit. For example, the support structural body 27 has a cuboidal box shape. The components 21, 22, 23, 24, 25, 26, 31, 32, 33, 34, and 35 (except for the support structural body 27) included in the fuel supply unit 20 are accommodated in the box-shaped support structural body 27 and are directly or indirectly connected and fixed to the support structural body 27. The support structural body 27 may also be called a second support structural body.

The support structural body 27 is attachable to and detachable from the carbody 5 while keeping supporting the fuel tanks 21 and 22. To be specific, the fuel supply unit 20 is detachably mounted on the carbody 5. The fuel supply unit 20 is replaceable with another fuel supply unit 20 having the same structure.

### Configuration of Power Generating Unit

The electric power generating unit 40 includes the internal combustion engine 41, a fuel pipe 42, the electric power generator (motor generator) 43, an inverter 44, an electric interface 45, a communication interface 46, electric power control circuitry 47, an informer 49, and the like. The electric power control circuitry 47 is also called an electric power ECU (Electronic Control Unit) 47. The electric power control circuitry 47 is one example of unit control circuitry.

The internal combustion engine 41 combusts the fuel gas and converts combustion energy of the fuel gas into rotational energy of a crank shaft 41a. In the present embodiment, the internal combustion engine 41 is a hydrogen engine that can use the hydrogen gas as the fuel. The internal combustion engine 41 is, for example, a multiple cylinder engine.

The internal combustion engine 41 includes throttle equipment 41b, an igniter 41c, and a fuel supplier 41d. The throttle equipment 41b adjusts an intake air amount of the internal combustion engine 41. For example, the throttle equipment 41b is electronic control throttle equipment that makes a throttle valve perform opening/closing operations by a motor. The igniter 41c ignites a fuel-air mixture in a combustion chamber of the internal combustion engine 41. The igniter 41c is, for example, an ignition plug. The fuel supplier 41d supplies the fuel to a combustion chamber of the internal combustion engine 41.

One end portion of the fuel pipe 42 is connected to the fuel supplier 41d of the internal combustion engine 41. The other end portion of the fuel pipe 42 includes a fuel receiving port 42a. The fuel receiving port 42a of the electric power generating unit 40 and the supply port 23d of the fuel supply unit 20 are connected to each other by a connection pipe 15. The connection pipe 15 is supported by, for example, the carbody 5. The hydrogen gas is guided from the fuel supply unit 20 through the connection pipe 15 and the fuel pipe 42 to the fuel supplier 41d of the internal combustion engine 41.

The electric power generator 43 generates electric power by rotational power of the internal combustion engine 41. The electric power generator 43 includes a rotating shaft 43a that is coupled to the crank shaft 41a so as to rotate together with the crank shaft 41a. A rotor is located at the rotating shaft 43a, and a stator is located at a position opposed to the rotor. The electric power generator 43 is, for example, a three-phase induction motor.

The inverter 44 is electrically connected to the electric power generator 43. The inverter 44 converts AC power, generated by the electric power generator 43, into DC power. The inverter 44 may also be called a converter. Moreover, the inverter 44 is electrically connected to the electric interface 45. The electric interface 45 electrically connects the inverter 44 of the electric power generating unit 40 to the electric power storing body 13 located outside the electric power generating unit 40. In the case of contact power supply, the electric interface 45 is a detachable terminal or a detachable electric power connector. In the case of non-contact power supply, the electric interface 45 is a coil.

The communication interface 46 connects the electric power ECU 47 to the integrator 60, located outside the electric power generating unit 40, such that the electric power ECU 47 is communicable with the integrator 60. In the case of wired communication, the communication interface 46 is a detachable terminal or a detachable communication connector. In the case of wireless communication, the communication interface 46 is a known wireless communicator.

The electric power ECU 47 controls the internal combustion engine 41, the inverter 44, and the like that are control targets in each electric power generating unit 40. Hereinafter, the control targets in each electric power generating unit 40 are referred to as "unit control targets X." The electric power ECU 47 controls the unit control targets X based on signals received from the integrator 60 through the communication interface 46. The unit control targets X include the throttle equipment 41b, the igniter 41c, the fuel supplier 41d, and the inverter 44 in the internal combustion engine 41. The unit control targets X may include the informer 49, an oil control valve unit 54, and the like which will be described later.

The electric power ECU 47 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program. The electric power ECU 47 is one example of the unit control circuitry.

Moreover, the electric power ECU 47 communicates with the integrator 60 through the communication interface 46. Specifically, the electric power ECU 47 associates state information with unit identification information (unit ID) and transmits the state information and the unit identification information to the integrator 60 through the communication interface 46. The state information indicates a state of the electric power generating unit 40, and the unit identification information (unit ID) is information for identifying the electric power generating unit 40.

The state information includes information regarding damage over time. Moreover, the state information may include a past driving history. For example, the state information may include information regarding a rotational frequency of the internal combustion engine 41, generated torque of the internal combustion engine 41, the driving history of the internal combustion engine 41, the electric power generation amount of the electric power generator 43, impact force applied to the electric power generating unit 40 from an outside, or the lives of the components of the electric power generating unit 40.

Moreover, the electric power ECU 47 receives an electric power generation command from the integrator 60 through the communication interface 46. Details of the electric power generation command will be described later.

The informer 49 is electrically connected to the electric power ECU 47. The informer 49 informs of the state of the electric power generating unit 40. The informer 49 includes, for example, a display or a light emitter. For example, the display is a liquid crystal display. For example, the light emitter is a LED. The informer 49 informs of, for example, maintenance information related to the maintenance of the electric power generating unit 40. The maintenance information is, for example, information indicating the necessity of the replacement, repair, or inspection of the electric power generating unit 40 itself, information indicating a scheduled timing of the replacement, repair, or inspection of the electric power generating unit 40 itself, information indicating the necessity of the replacement, repair, or inspection of the components included in the electric power generating unit 40, or information indicating the timings of the replacement, repair, or inspection of the components included in the electric power generating unit 40.

Moreover, the electric power generating unit 40 includes an oil pump 51, a lubricating oil passage 52, a drive oil passage 53, the oil control valve unit 54, and an oil port 55.

The oil pump 51 is driven in mechanical association with the rotation of the crank shaft 41a. Oil is pumped up from an oil pan of the internal combustion engine 41 by the oil pump 51, and the lubricating oil passage 52 guides this oil as lubricating oil to respective places, such as a gear of the internal combustion engine 41.

The drive oil passage 53 extends from the lubricating oil passage 52. One end portion of the drive oil passage 53 is connected to the lubricating oil passage 52. Moreover, the other end portion of the drive oil passage 53 is connected to the oil port 55.

The oil port 55 (one example of a fluid energy outlet) is a fluid interface that outputs the oil to a hydraulic actuator 16 located outside the electric power generating unit 40. An oil pipe 17 (one example of a fluid pipe) is detachably connected to the oil port 55 and is connected to an inflow port of the hydraulic actuator 16 mounted on the carbody 5. The hydraulic actuator 16 is, for example, a hydraulic cylinder that generates braking force.

The oil control valve unit 54 is located at the drive oil passage 53. The oil control valve unit 54 serves as fluid control equipment that opens and closes the drive oil passage 53 to control hydraulic pressure applied to the hydraulic actuator 16. For example, when the braking command is transmitted from the operator 10a to the car control circuitry 10, the car control circuitry 10 transmits the braking command to an integration ECU 62, and the integration ECU 62 transmits the braking command to the electric power ECU 47. The electric power ECU 47 controls the oil control valve unit 54 based on the received braking command.

The drive oil passage 53 does not have to extend from the lubricating oil passage 52. For example, the drive oil passage 53 may be supplied with the oil from an oil pump different from the oil pump 51 for lubrication. Moreover, the drive oil passage 53, the oil pump that supplies the oil to the drive oil passage 53, and the oil control valve unit 54 located at the drive oil passage 53 do not have to be located in the electric power generating unit 40 and may be located in the carbody 5. In this case, the oil control valve unit 54 may be directly controlled by the car control circuitry 10 without through the electric power ECU 47.

Moreover, the electric power generating unit 40 includes a circulator that circulates a circulating liquid in at least the internal combustion engine 41. The circulator includes a cooling medium pump 56, a cooling channel 57, and a radiator 58. The cooling medium pump 56 discharges a cooling medium (water, for example). The cooling medium pump 56 is driven in mechanical association with the rotation of the crank shaft 41a. However, the cooling medium pump 56 may be driven by another power source.

The cooling channel 57 is a circulation channel through which the cooling medium discharged from the cooling medium pump 56 is guided to, for example, the internal combustion engine 41, and the cooling medium (corresponding to the circulating liquid) which has cooled the internal combustion engine 41 returns to the cooling medium pump 56. The cooling channel 57 may guide the cooling medium to the electric power generator 43 and the inverter 44 to cool the electric power generator 43 and the inverter 44. The radiator 58 is located at the cooling channel 57 and radiates the heat of the cooling medium circulating in the cooling channel 57.

The electric power generating unit 40 includes a support structural body 48. The components 44, 45, 46, 47, 49, 51, 52, 53, 54, 55, 56, 57, and 58 included in the electric power generating unit 40 except for the support structural body 48 are supported by the support structural body 48 and are combined as a unit. The components 44, 45, 46, 47, 49, 51, 52, 53, 54, 55, 56, 57, and 58 (except for the support structural body 48) included in the electric power generating unit 40 are directly or indirectly connected and fixed to the support structural body 48. The support structural body 48 may also be called a first support structural body.

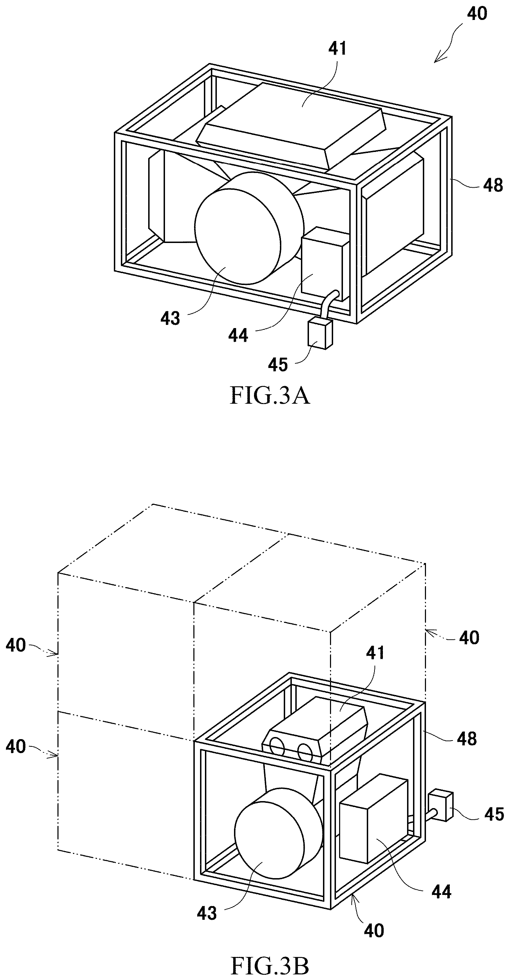

FIG. 3A is a schematic perspective view showing the electric power generating unit 40 including the internal combustion engine 41 of a horizontally opposed type, as one example of the electric power generating unit 40. FIG. 3B is a schematic perspective view showing the electric power generating unit 40 including the internal combustion engine 41 of an in-line type, as another example of the electric power generating unit 40. In FIGS. 3A and 3B, only the internal combustion engine 41, the electric power generator 43, the inverter 44, and the electric interface 45 are shown among the components of the electric power generating unit 40 which are supported by the support structural body 48, and the other components are not shown.

As shown in FIG. 3, in the present embodiment, the support structural body 48 includes frames. The frames of the support structural body 48 are coupled to each other so as to surround the components 44, 45, 46, 47, 49, 51, 52, 53, 54, 55, 56, 57, and 58 of the electric power generating unit 40. For example, the support structural body 48 includes: upper-lower frames extending in an upper-lower direction; and horizontal frames connected to the upper-lower frames and extending in a horizontal direction. For example, the support structural body 48 includes a plate on which the internal combustion engine 41 is placed. For example, the support structural body 48 may have a structure that supports the components, such as the internal combustion engine 41 and the electric power generator 43, of the electric power generating unit 40 from below or may have a structure that supports those from above (i.e., a structure that supports those by suspending them).

In the motor car 2a of the present embodiment, the support structural bodies 48 are not located so as to be lined up in the upper-lower direction. However, as shown by two-dot chain lines in FIG. 3B, the support structural bodies 48 can be stacked on each other in the upper-lower direction. When the support structural bodies 48 are stacked on each other in the upper-lower direction, attaching positions of the support structural bodies 48 with respect to the movable body can be reduced. Moreover, the support structural bodies 48 may be coupleable to each other in the horizontal direction. To be specific, the support structural bodies 48 may be located so as to be lined up in at least one of the front-rear direction or the left-right direction. In this case, when attaching or detaching one electric power generating unit 40, it is unnecessary to detach the other electric power generating units 40 from the movable body, unlike a case where the electric power generating units 40 are located in the upper-lower direction.

The support structural body 48 is attachable to and detachable from the carbody 5 while keeping supporting both of the internal combustion engine 41 and the electric power generator 43. To be specific, the electric power generating unit 40 is detachably mounted on the carbody 5. The electric power generating unit 40 is replaceable with another electric power generating unit 40 having the same structure. Moreover, the support structural bodies 48 mounted on the carbody 5 are common in structure to each other. For example, the dimensions of the support structural bodies 48 in the upper-lower direction, the left-right direction, and the front-rear direction are the same as each other. Therefore, one electric power generating unit 40 mounted on the carbody 5 is replaceable with another electric power generating unit 40 having the same structure.

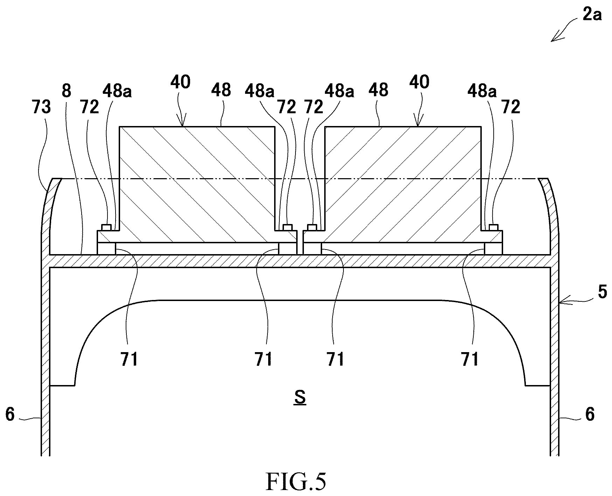

FIG. 4 is a schematic plan view showing an upper portion of the motor car 2a of FIG. 1. FIG. 5 is a schematic front sectional view taken along line VI-VI of FIG. 4. In the present embodiment, as shown in FIG. 4, four electric power generating units 40 and one fuel supply unit 20 are located above the roof 8 of the carbody 5 of the motor car 2a. More specifically, two electric power generating units 40, one fuel supply unit 20, the air conditioner 9, and another two electric power generating units 40 are lined up in this order from a front side. The other equipment of the motor car 2a may be located above the roof 8.

As shown in FIG. 5, elastic bodies 71 are located between the roof 8 of the carbody 5 and the support structural body 48 of the electric power generating unit 40 (also see FIG. 1). For example, the elastic body 71 is part of an anti-vibration mount. The elastic body 71 may be, for example, rubber, an air spring, or a coil spring.

In a state where the carbody 5 and the support structural body 48 are connected to each other through the elastic bodies 71, the support structural body 48 is fixed to the carbody 5 by fasteners 72. The fasteners 72 are, for example, bolts. For example, as shown in FIG. 5, the support structural body 48 may include a flange 48a (not shown in FIG. 3) that is held by the fasteners 72 so as not to be movable relative to the carbody 5.

Since the elastic bodies 71 are located between the carbody 5 and the support structural body 48, vibrations of the carbody 5 can be prevented from being transmitted to the components of the electric power generating unit 40. Since the elastic bodies 71 are located between the carbody 5 and the support structural body 48, there is a gap between the carbody 5 and the support structural body 48 as shown in FIG. 5. The electric power generating unit 40 is mounted on the carbody 5 in a state where there is a gap between the internal combustion engine 41 and the roof 8 of the carbody 5. Therefore, the heat transfer from the internal combustion engine 41 to the carbody 5 can be suppressed.

### Cooling Structure

The carbody 5 includes a cooling structure that utilizes traveling wind to cool at least one of the internal combustion engine 41 or the electric power generator 43. The cooling structure of the present embodiment is a structure in which each electric power generating unit 40 is located such that in a front view of the motor car 2a (i.e., when viewed in a proceeding direction), at least part of the electric power generating unit 40 is visible, in other words, the traveling wind from the front side directly hits at least part of the electric power generating unit 40. Specifically, a projecting plate 73 extends upward from an upper surface of the roof 8. The projecting plate 73 extends upward from a front end portion of the roof 8 and a pair of side end portions of the roof 8 which are opposed to each other in the car width direction. As shown in FIG. 5, the length of the projecting plate 73 in the upper-lower direction is adjusted such that an upper end of the projecting plate 73 is located lower than upper ends of the electric power generating units 40. To be specific, the electric power generating units 40 project upward from the roof so as to be visible in a front view of the motor car 2a. Therefore, the traveling wind easily and directly hits the electric power generating units 40 from the front side.

The cooling structure is not limited to this. For example, the upper ends of the electric power generating units 40 may be lower than the upper end of the projecting plate 73. To be specific, in the front view, the electric power generating units 40 may be located so as to be hidden by the projecting plate 73. Even in this case, a structure that opens an upper side of the electric power generating units 40 in the carbody 5 serves as the cooling structure. To be specific, since the upper side of the electric power generating units 40 is open, the traveling wind flows from the upper side of the projecting plate 73 into a space (space covered by the projecting plate 73 from a lateral side) which is located around the electric power generating units 40 and surrounded by the projecting plate 73. Since the traveling wind flows from the upper side into the space surrounded by the projecting plate 73, the electric power generating units 40 are cooled.

Moreover, the upper side of the electric power generating units 40 does not have to be open. For example, instead of the projecting plate 73, the carbody 5 may include a cover that covers a space which is located above the roof 8 and around the electric power generating units 40. In this case, the cover may include a slit or slits through which the traveling wind flows into the space covered with the cover, i.e., the space around the electric power generating units 40. The slit serves as the cooling structure. To be specific, the electric power generating units 40 are cooled by rotational flow generated inside the cover by the flow of the traveling wind that flows through the slit into the space surrounded by the cover. The slit may be open in the car width direction, a car longitudinal direction, or the upper-lower direction.

Moreover, the electric power generating unit 40 includes at least one sensor 59 that detects the state of the electric power generating unit 40. Information detected by the at least one sensor 59 is transmitted to the electric power ECU 47.

In other words, the state of the electric power generating unit 40 includes at least one of the states of the components 44, 45, 46, 47, 49, 51, 52, 53, 54, 55, 56, 57, and 58 included in the electric power generating unit 40. For simplicity, in FIG. 2, the at least one sensor 59 is shown by one block. Moreover, the at least one sensor 59 may include a sensor that constitutes part of the component 44, 45, 46, 47, 49, 51, 52, 53, 54, 55, 56, 57, or 58 of the electric power generating unit 40.

For example, the at least one sensor 59 may include: a temperature sensor that detects an oil temperature; a temperature sensor that detects the temperature of cooling water; a temperature sensor that detects the temperature of the electric power generator 43; a temperature sensor that detects the temperature of the inverter 44; a current sensor included in the inverter 44; a rotational frequency sensor that detects the rotational frequency (rotational speed) of the internal combustion engine 41; a throttle opening degree sensor; a strain gauge that detects mechanical loads of machine parts and structural bodies included in the electric power generating unit 40; and a flow rate sensor that detects the flow rate of the fuel flowing in the fuel pipe 42.

### Configuration of Integrator

Referring back to FIG. 2, the integrator 60 receives information from the electric power generating units 40 and the fuel supply unit 20. The integrator 60 includes a communication interface 61, integration control circuitry 62, and a display 63. The integration control circuitry 62 is also called the integration ECU (Electronic Control Unit) 62.

The communication interface 61 connects the integration ECU 62 to the car control circuitry 10, the electric power generating unit 40, and the fuel supply unit 20 such that the integration ECU 62 is communicable with the car control circuitry 10, the electric power generating unit 40, and the fuel supply unit 20. In the case of wired communication, the communication interface 61 is a detachable terminal or a detachable communication connector. In the case of wireless communication, the communication interface 61 is a known wireless communicator.

The integration ECU 62 communicates with all of the electric power generating units 40 and the fuel supply unit 20 which are mounted on the motor car 2a. The integration ECU 62 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program.

The integration ECU 62 associates the state information and the unit identification information, which are received from the electric power generating units 40 and the fuel supply unit 20, with each other and stores the state information and the unit identification information in the memory.

The display 63 is electrically connected to the integration ECU 62. The display 63 outputs, for example, maintenance information related to the maintenance of each electric power generating unit 40.

### Control of Movable Body

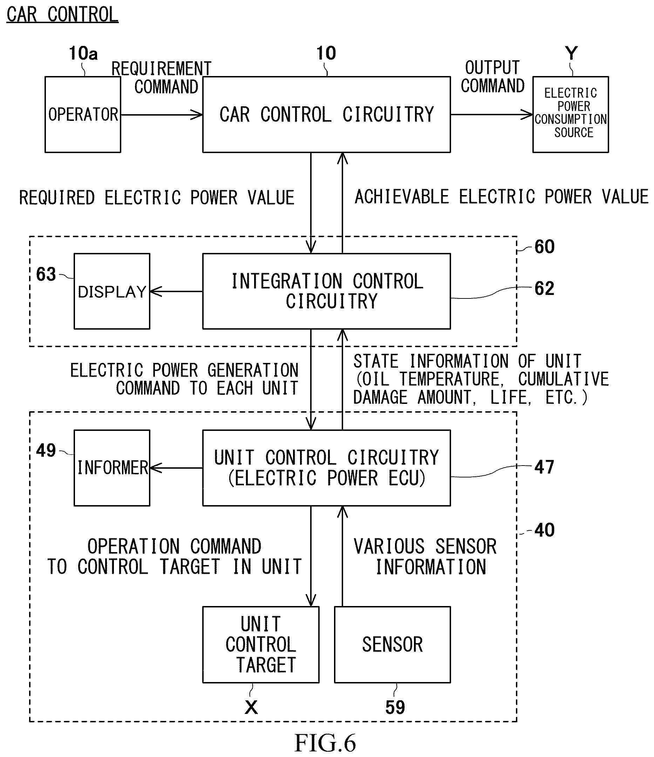

Next, one example of the control of the drive system during the traveling of the train set 1 will be described with reference to FIGS. 6 to 8.

FIG. 6 is a block diagram showing the flow of communication information of the components in the drive system shown in FIG. 2. The requirement command is transmitted from the operator 10a to the car control circuitry 10 in accordance with an operation input of the driver with respect to the operator 10a.

The car control circuitry 10 generates an output command based on the requirement command received from the operator 10a and transmits the output command to the inverter 14 or the like to control the inverter 14 or the like. Thus, the rotational driving force generated by the electric motor 11 is controlled. Electric power consumption sources, such as electric components and the electric motor 11 in the carbody 2, to which the electric power is supplied from the electric power generating units 40 are referred to as electric power consumption sources Y.

In the present embodiment, the internal combustion engine 41 and the electric power generator 43 in the electric power generating unit 40 are controlled based on information indicating a use state of the electric power by at least one of the electric component or the electric motor 11 in the carbody 5. The information indicating the use state of the electric power is, for example, information regarding the electric power consumption of the electric motor 11. The information indicating the use state of the electric power of the electric motor 11 may include information, such as information of the speed of the train set 1 as the movable body, which influences the electric power consumption of the electric motor 11. For example, a total electric power generation amount required of the four electric power generating units 40 when the train set 1 is slowly traveling at less than a predetermined speed is smaller than that when the train set 1 is normally traveling at the predetermined speed.

The control of the internal combustion engine 41 and the electric power generator 43 will be described in more detail. As the information indicating the use state of the electric power, the car control circuitry 10 acquires electric power consumption information indicating an electric power consumption state of the electric power consumption source Y. The car control circuitry 10 receives the electric power consumption information from, for example, the electric power consumption source Y. The car control circuitry 10 may calculate the electric power consumption information based on information received from various sensors (such as the current sensor included in the inverter 14) mounted on the carbody 2 or may receive the electric power consumption information from other equipment.

Moreover, the car control circuitry 10 determines a required electric power value based on at least one of the requirement command from the operator 10a or the electric power consumption information. The required electric power value indicates electric power required of all the electric power generating units 40. Then, the car control circuitry 10 transmits the required electric power value to the integrator 60.

The car control circuitry 10 sets the required electric power value to not more than an electric power value that is achievable by the electric power generating units 40. For example, as shown in FIG. 6, the car control circuitry 10 may receive information indicating the achievable electric power value, from the integration ECU 62.

The integration ECU 62 receives the required electric power value from the car control circuitry 10. Moreover, the integration ECU 62 receives the state information from each electric power generating unit 40. The integrator 60 transmits the electric power generation command as an operation command to each electric power generating unit 40 based on the state information and required electric power information (electric power consumption information). The electric power generation command includes a required electric power generation amount that is required of the electric power generating unit 40. The integration ECU 62 determines the required electric power generation amount, which is to be transmitted to each electric power generating unit 40, based on the state information and the required electric power information (electric power consumption information).

Each electric power ECU 47 receives the electric power generation command from the integration ECU 62 and controls the unit control target X based on the required electric power generation amount determined by the integration ECU 62.

### Individual Control of Power Generating Units

In the present embodiment, the electric power generation amounts that are required of the four electric power generating units 40 may be different from each other. Moreover, the electric power generation command may also include a stop command that instructs the stop of the electric power generation. For example, the integration ECU 62 may not transmit the electric power generation command to at least one of the four electric power generating units 40 or may transmit the stop command of the electric power generation to at least one of the four electric power generating units 40. The integration ECU 62 may comprehensively consider the state, maintenance information, electric power generation efficiency, and the like of each electric power generating unit 40 to change the content of the electric power generation command for each electric power generating unit 40.

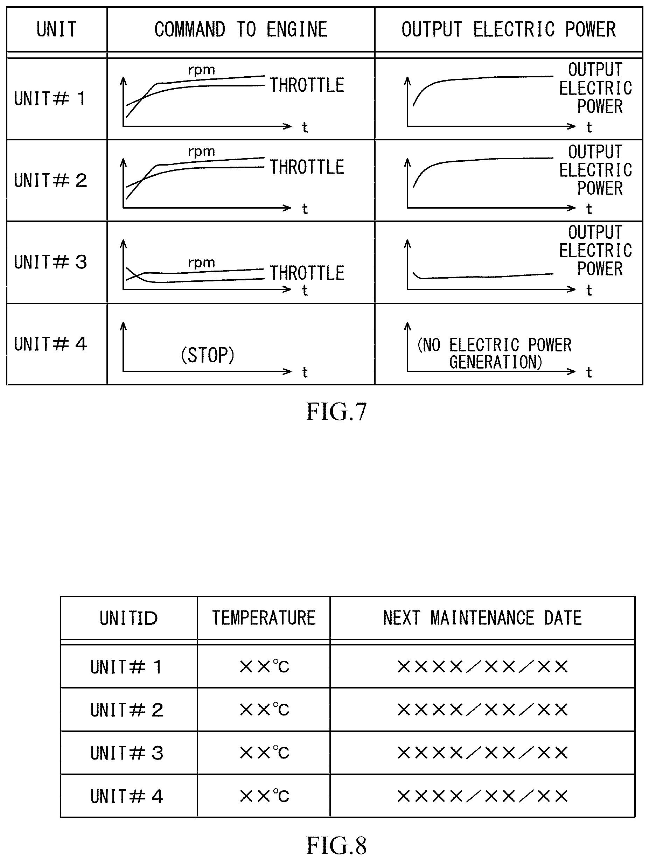

FIG. 7 is a diagram for explaining an example in which the contents of the electric power generation commands transmitted to the four electric power generating units 40 are different from each other. Specifically, FIG. 7 is a table showing one example including the contents of the electric power generation commands transmitted to the internal combustion engines 41 of the four electric power generating units 40 and the output electric powers corresponding to the electric power generation commands. Hereinafter, the four electric power generating units 40 may be referred to as a "unit #1," a "unit #2," a "unit #3," and a "unit #4." Each of the electric power generation commands transmitted to the internal combustion engines 41 and the output electric powers is shown by a graph. More specifically, in FIG. 7, as an operation command transmitted to the internal combustion engine 41, a temporal transition of the engine rotational frequency and a temporal transition of the throttle opening degree are shown by a graph.

Since the unit #1 and the unit #2 receive the respective electric power generation commands indicating the electric power generation amounts that are the same as each other, as shown in FIG. 7, the output electric power of the unit #2 is the same as the output electric power of the unit #1. Since the unit #3 receives the electric power generation command indicating the smaller electric power generation amount than the unit #1 and the unit #2, the output electric power of the unit #3 is a value smaller than the output electric power of the unit #1. Moreover, since the unit #4 receives the stop command from the integration ECU 62, the unit #4 does not generate the electric power.

In the present embodiment, total electric power generated by the electric power generating units 40, the number of which is smaller than the number of all electric power generating units 40 by one, is set larger than the electric power necessary to advance the movable body 1. Therefore, even when there is an abnormality in one of the electric power generating units 40, the movable body 1 can continuously advance by the supply of the electric power from the other electric power generating units 40.

### Example 1 in which the contents of the electric power generation commands for the respective units are made different from each other

An example in which the contents of the electric power generation commands for the respective electric power generating units 40 are made different from each other based on the states or maintenance information of the electric power generating units 40 will be described with reference to FIG. 8. FIG. 8 is a table showing the unit identification information, temperature information corresponding to the unit identification information, and the maintenance information corresponding to the unit identification information. For example, the temperature information is information indicating the temperature detected by the sensor 59 in the electric power generating unit 40. The temperature may be the temperature of the lubricating oil for the internal combustion engine 41 or the like, the temperature of the cooling water for cooling the internal combustion engine 41 or the like, the temperature of the electric power generator 43, or the temperature of the inverter 44.

The integration ECU 62 receives the temperature information from each electric power generating unit 40 as one type of state information. To be specific, the electric power ECU 47 associates the state information (including the temperature information) indicating the state of the electric power generating unit 40 with the unit identification information (unit ID) for identifying the electric power generating unit 40 and transmits the state information and the unit identification information to the integration ECU 62 through the communication interface 46. The integration ECU 62 associates the state information indicating the state of the electric power generating unit 40 with the unit identification information and stores the state information and the unit identification information in the memory.

For example, based on the pieces of state information from the units #1, #2, #3, and #4 that are the four electric power generating units 40, the integration ECU 62 determines respective electric power amounts that are required of the four electric power generating units 40. Basically, the sum of the electric power amounts that are required of the four electric power generating units 40 coincides with the required electric power value received from the car control circuitry 10.

For example, the integration ECU 62 determines whether or not the temperature corresponding to each electric power generating unit 40 exceeds a predetermined threshold. For example, when the integration ECU 62 determines that the temperature corresponding to the unit #4 exceeds the predetermined threshold, to suppress damages (i.e., temperature loads) of the components (such as the internal combustion engine 41) included in the unit #4, the integration ECU 62 transmits the stop command to the unit #4 or transmits to the unit #4 the electric power generation command indicating the electric power generation amount that is smaller than the electric power generation amount that is required of each of the units #1, #2, and #3 that are the other electric power generating units 40.

Moreover, as shown in FIG. 8, the integration ECU 62 associates the maintenance information of the electric power generating unit 40 with the unit identification information of the electric power generating unit 40 and stores the maintenance information and the unit identification information. For example, the maintenance information may be information received by the integration ECU 62 from each electric power generating unit 40 or may be information received by the integration ECU 62 from an outside of the trail-car. As one example of the maintenance information, FIG. 8 shows information indicating a next maintenance date of the electric power generating unit 40. In the present embodiment, the next maintenance date of the electric power generating unit 40 is a timing at which the electric power generating unit 40 is replaced with another electric power generating unit 40 which has already been subjected to the maintenance.

For example, the integration ECU 62 may determine the electric power generation command of the electric power generating unit 40 whose next maintenance date is close such that an overload on this electric power generating unit 40 is permitted. For example, the integration ECU 62 may determine the electric power generation command of the electric power generating unit 40 whose next maintenance date is close such that this electric power generating unit 40 continuously generates the electric power even when the temperature exceeds the predetermined threshold.

### Example 2 in which the contents of the electric power generation commands for the respective units are made different from each other

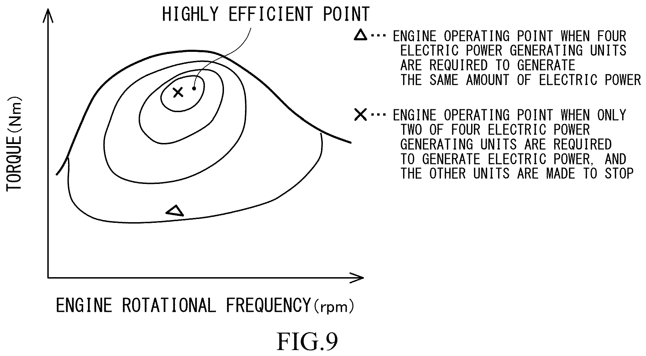

An example in which the contents of the electric power generation commands for the respective electric power generating units 40 are made different from each other from the viewpoint of the electric power generation efficiency will be described with reference to FIG. 9. FIG. 9 shows one example of an efficiency map of the internal combustion engine 41. The efficiency map shown in FIG. 9 is a fuel consumption rate map. In FIG. 9, a horizontal axis represents an engine rotational frequency, and a vertical axis represents engine torque. In FIG. 9, the fuel consumption rate of the internal combustion engine 41 is shown by contour lines. A graph shown by a thick line in FIG. 9 is an engine performance curve indicating maximum torque of the internal combustion engine 41.

The efficiency deteriorates in a direction away from a highly efficient point in FIG. 9. Therefore, from the viewpoint of the fuel consumption rate, it is desirable that the internal combustion engine 41 of the electric power generating unit 40 be made to operate in a region that is as close to the highly efficient point as possible.

For example, it is assumed that when each of the units #1, #2, #3, and #4 that are the four electric power generating units 40 is instructed to generate electric power corresponding to one fourth of the required electric power value transmitted from the car control circuitry 10, an operating point of the internal combustion engine 41 of each electric power generating unit 40 is a point shown by a triangle in FIG. 9. It is understood that since this operating point is relatively far from the highly efficient point, the operating point is inefficient. In this case, each of only two of the four units #1, #2, #3, and #4 is instructed to generate electric power corresponding to one half of the required electric power value transmitted from the car control circuitry 10, and the other two units are made to stop. Thus, the engine operating point becomes a point which is shown by x in FIG. 9 and close to the highly efficient point, and this improves the fuel efficiency.

As above, the integration ECU 62 may determine the electric power generation amount that is required of each electric power generating unit 40, from the engine efficiency map stored in the memory. Moreover, although FIG. 9 shows the engine efficiency map, the integration ECU 62 may determine the electric power generation amount that is required of each electric power generating unit 40, from a motor efficiency map of the electric power generator 43. Moreover, for example, the integration ECU 62 may store in the memory at least one of the efficiency map of the internal combustion engine 41 of the electric power generating unit 40 or the efficiency map of the electric power generator 43 of the electric power generating unit 40. Then, based on at least one efficiency map and the required electric power information received from the car control circuitry 10, the integration ECU 62 may determine the number of electric power generating units 40 to which the electric power generation commands are to be transmitted. In other words, based on the required electric power information received from the car control circuitry 10, the integration ECU 62 may determine the electric power generating unit 40 that is to be stopped. Based on the state information received from each electric power generating unit 40, the integration ECU 62 may determine the electric power generating unit 40 whose electric power generation is to be stopped.

### Informing of Maintenance Information

Moreover, the integrator 60 transmits the electric power generation commands to the electric power generating units 40, and in addition, collects and outputs the maintenance information related to the maintenance of the electric power generating units 40. In the present embodiment, the integrator 60 periodically or non-periodically receives the state information from each electric power generating unit 40 and displays on the display 63 the maintenance information related to the maintenance of the electric power generating unit 40 based on the received state information of the electric power generating unit 40. Specifically, the integration ECU 62 determines the necessity of the maintenance of each electric power generating unit 40 based on the state information received from the electric power generating unit 40. The integration ECU 62 displays the determined necessity of the maintenance as the maintenance information on the display 63. A company that manages the movable body 1 can see the display 63 to grasp, for example, the electric power generating unit 40 that requires the maintenance, the timing of the maintenance, and the like.

Moreover, in the present embodiment, the integration ECU 62 transmits a determination result of the necessity of the maintenance of each electric power generating unit 40 to the electric power generating unit 40. The electric power ECU 47 makes the informer 49 inform of the received determination result as the maintenance information. For example, when the informer 49 is the light emitter, the electric power ECU 47 of the electric power generating unit 40 that requires the maintenance makes the informer 49 emit light such that the necessity of the maintenance is visually confirmable. For example, the electric power ECU 47 may make the light emitter of the electric power generating unit 40, which requires the maintenance, flash or may make the light emitter emit light of a color that can be distinguished from the unit that does not require the maintenance. Thus, a maintenance worker can easily find the electric power generating unit 40 that requires the maintenance among the electric power generating units 40.

### Maintenance Method

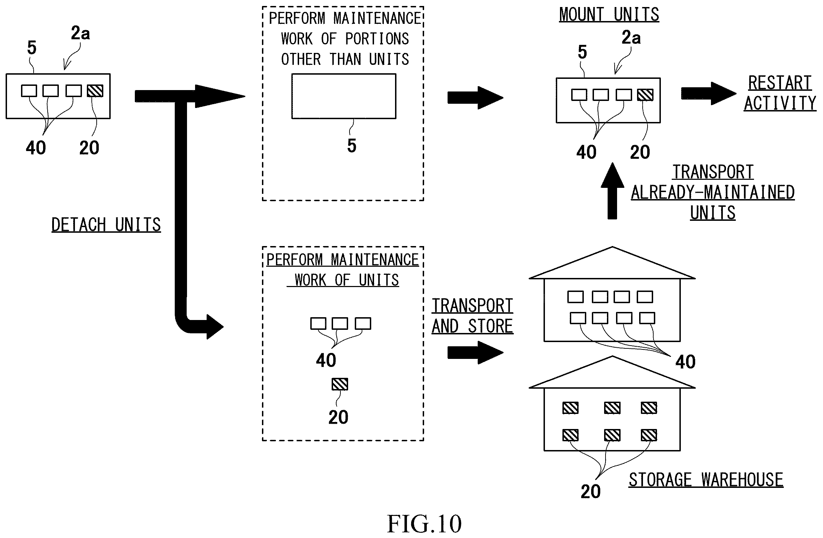

Next, a maintenance method of the motor car 2a will be described with reference to FIG. 10. For example, the maintenance of the motor car 2a is periodically performed or is performed when there is an abnormality in the component included in the motor car 2a. FIG. 10 shows the flow of the maintenance method of the motor car 2a. Hereinafter, the electric power generating unit 40 and the fuel supply unit 20 are simply referred to as the unit 20 and the unit 40, respectively.

The motor car 2a includes maintenance targets, and the maintenance targets include the units 20 and 40. In the present embodiment, among the maintenance targets of the motor car 2a, the units 20 and 40 and the other maintenance targets are separately subjected to the maintenance.

Specifically, before starting the maintenance work of the motor car 2a, the motor car 2a is transported to a maintenance work place, and then, all the units 20 and 40 are detached from the carbody 5. All the units 20 and 40 which are detached for the maintenance from the carbody 5 may also be called not-yet-maintained units. After all the units 20 and 40 are detached, the maintenance work of the maintenance targets other than the units 20 and 40 is started.

The maintenance work of the units 20 and 40 which have been detached from the carbody 5 is also started. Hereinafter, the units 20 and 40 which have been detached from the carbody 5 are referred to as old units 20 and 40. After the maintenance work of the old units 20 and 40 is completed, the old units 20 and 40 are stored in, for example, a storage warehouse. The storage warehouse stores already-maintained units 20 and 40. Hereinafter, the already-maintained units 20 and 40 are referred to as new units. The new units 20 and 40 stored in the storage warehouse are the same in structure as the old units 20 and 40. To be specific, the storage warehouse stores the units 20 and 40 for replacement.

Regardless of whether or not the maintenance of the old units 20 and 40 which have been detached from the motor car 2a has been completed, the already-maintained units 20 and 40 different form the old units 20 and 40 are mounted on the motor car 2a. To be specific, before the maintenance work of the old units 20 and 40 is completed, the new units 20 and 40 are transported from the storage warehouse to the maintenance work place for the motor car 2a, and then, the new units 20 and 40 are mounted on the motor car 2a.

Therefore, when the maintenance work of the portions of the motor car 2a other than the old units 20 and 40 and the work of attaching the new units 20 and 40 to the motor car 2a are completed, the maintenance work of the motor car 2a is completed regardless of whether or not the maintenance of the old units 20 and 40 is completed, and the motor car 2a can restart its activity. To be specific, the motor car 2a can restart its activity without waiting for the completion of the maintenance work of the old units 20 and 40. After the maintenance work of the old units 20 and 40 is completed, these units 20 and 40 are stored in the storage warehouse as the already-maintained units.

### Effects

As described above, in the present embodiment, the internal combustion engine 41 and the electric power generator 43 are supported by the support structural body 48 and are integrated as the electric power generating unit 40. Therefore, the internal combustion engine 41 and the electric power generator 43 are integrally attachable to and detachable from the carbody 5.

According to a car in which mechanical energy output from an internal combustion engine is directly transmitted to a wheel through a power transmitting structure, it is difficult to detach the internal combustion engine from the car. There is a problem that when there is an abnormality in the internal combustion engine mounted on the car or when the internal combustion engine is subjected to the maintenance work, such as periodic inspection, the maintenance work of the internal combustion engine requires time. Since the maintenance work requires time, a period of time in which the activity of the car is in a stop state becomes long.

According to the present embodiment, when electric energy output from the electric power generator 43 is transmitted to the electric motor 11 through, for example, an electric cable, and the support structural body 48 is attached to or detached from the carbody 5, the electric cable as an energy supply passage is attached or detached. To be specific, according to the present embodiment, the internal combustion engine 41 and the electric power generator 43 are more easily attached to and detached from the carbody 5 than the car in which the mechanical energy output from the internal combustion engine is directly transmitted to the wheel through the power transmitting structure. Therefore, when subjecting the internal combustion engine 41 and the electric power generator 43 to the maintenance work, the electric power generating unit 40 mounted is replaced with the electric power generating unit 40 which has already been subjected to the maintenance work, and this can facilitate the restart of the activity of the car.

Moreover, in the present embodiment, the electric power generating units 40 are mounted on the carbody 5. Therefore, even when there is an abnormality in at least one of the electric power generating units 40, the other electric power generating units 40 can continue the supply of the electric power. Thus, the stop of the supply of the electric power is easily prevented.

Moreover, in the present embodiment, since the support structural bodies 48 of the electric power generating units 40 are common in structure to each other, the work of replacing the electric power generating unit 40 attached to the carbody 5 with another electric power generating unit 40 can be facilitated. Furthermore, when connection portions for a supply fluid and a discharge fluid and electrical connection portions for an electric signal, electric power, and the like are common to each other in addition to the support structural bodies 48, connection work can be facilitated. Examples of a material that flows through a fluid passage connected includes fuel, air, a cooling liquid, a lubricating liquid, and a fluid energy transmitting medium taken out from the electric power generating unit.

Moreover, in the present embodiment, the total electric power generated by the electric power generating units 40, the number of which is smaller than the number of all electric power generating units 40 included in the train set 1 by one, is set larger than the electric power necessary to advance the train set 1. Therefore, even when there is an abnormality in one of the electric power generating units 40, the train set 1 can continuously advance by the supply of the electric power from the other electric power generating units 40.

Moreover, in the present embodiment, the electric power ECU 47 is also supported by the support structural body 48. Therefore, when the electric power generating unit 40 is detached from the carbody 5, not only the internal combustion engine 41 and the electric power generator 43 but also the electric power ECU 47 can be subjected to the maintenance. Thus, maintenance and inspection items can be increased, and this can improve reliability. In other words, the maintenance work of the portions of the car 2 other than the electric power generating units 40 can be reduced more than when the electric power ECU 47 is attached to not the electric power generating unit 40 but the carbody 5, and this can bring forward the restart of the activity of the car 2.

Moreover, in the present embodiment, the circulator including the cooling medium pump 56, the cooling channel 57, the radiator 58, and the like is also supported by the support structural body 48. Therefore, when the electric power generating unit 40 is detached from the carbody 5, not only the internal combustion engine 41 and the electric power generator 43 but also the circulator can be subjected to the maintenance. Thus, the maintenance and inspection items can be increased, and this can improve reliability. In other words, the maintenance work of the portions of the car 2 other than the electric power generating units 40 can be reduced more than when the circulator is attached to not the electric power generating unit 40 but the carbody 5, and this can bring forward the restart of the activity of the car 2.

Moreover, in the present embodiment, since the oil pipe 17 of the carbody 5 is connectable to the oil port 55 of the electric power generating unit 40, fluid energy output from the internal combustion engine 41 can be transmitted to the hydraulic actuator 16 of the carbody 5 through the oil pipe 17. Mechanical connection of the oil pipe 17 through which the fluid energy is transmitted is easier than that of a connection member through which the mechanical energy is transmitted. Therefore, the energy from the internal combustion engine 41 can be easily taken out while facilitating the attaching and detaching of the electric power generating unit 40 to and from the carbody 5.

Moreover, in the present embodiment, the internal combustion engine 41 can use the hydrogen gas as the fuel. Therefore, the amount of toxic substances contained in the exhaust discharged from the internal combustion engine 41 which uses the hydrogen gas as the fuel is smaller than that contained in the exhaust discharged from the internal combustion engine 41 which uses hydrocarbon as the fuel. Thus, even when a purifier that purifies the toxic substances is supported by the support structural body 48, the electric power generating unit 40 is easily prevented from increasing in size.

Moreover, in the present embodiment, the motor car 2a includes the fuel supply unit 20 that is attachable to and detachable from the carbody 5. Therefore, when the amount of fuel stored in the fuel tanks 21 and 22 is small, or when the fuel tanks 21 and 22 are empty, the fuel supply unit 20 can be replaced with another fuel supply unit 20 including the fuel tanks 21 and 22 that adequately store the fuel. Therefore, the fuel can be supplied to the movable body in a shorter period of time than when the fuel is supplied to the fuel tanks fixed to the carbody 5.

Moreover, in the present embodiment, since the support structural body 48 is located higher than the passenger room S, the floor surface of the passenger room S can be easily located at a lower position than when the support structural body 48 is located lower than the passenger room S. For example, since the floor surface can be located at the lower position, the passenger room S can be made large, or a level difference that an occupant passes through when getting in or out of the car from an outside can be reduced.

Moreover, in the present embodiment, the carbody 5 includes the cooling structure that utilizes traveling wind to cool at least one of the internal combustion engine 41 or the electric power generator 43. Therefore, equipment that cools the electric power generating unit 40 can be saved.

Moreover, in the present embodiment, the integration ECU 60 controls at least one of the internal combustion engine 41 or the electric power generator 43 based on information indicating the use state of the electric power of at least one of the electric component or the electric motor 11 in the carbody 5. According to this configuration, the electric power generation efficiency can be improved in accordance with the use state of the electric power and the like.

Moreover, in the present embodiment, since the electric power storing body 13 that stores the electric power generated by the electric power generator 43 is included, the electric power can be efficiently utilized.

Since the electric power generating unit 40 includes the oil pump that is driven by the power of the internal combustion engine 41, the work of attaching and detaching the electric power generating unit 40 becomes easier than when an oil pump for lubrication is located at the carbody.

In the above embodiment, the train set 1 is described as the movable body. However, the type of the movable body is not limited to this. Modified Examples 1 and 2 will be described as examples of the movable body including the electric power generating unit 40 and the fuel supply unit 20. Since the electric power generating unit 40 and the fuel supply unit 20 are similar in configuration to those described in the above embodiment, explanations thereof are omitted. Moreover, since the supply of the electric power from the electric power generating unit 40 to the electric motor, the connection relations of the components, and the transmission and reception of information between the components are also similar to those in the above embodiment, explanations thereof are omitted.

### Modified Example 1

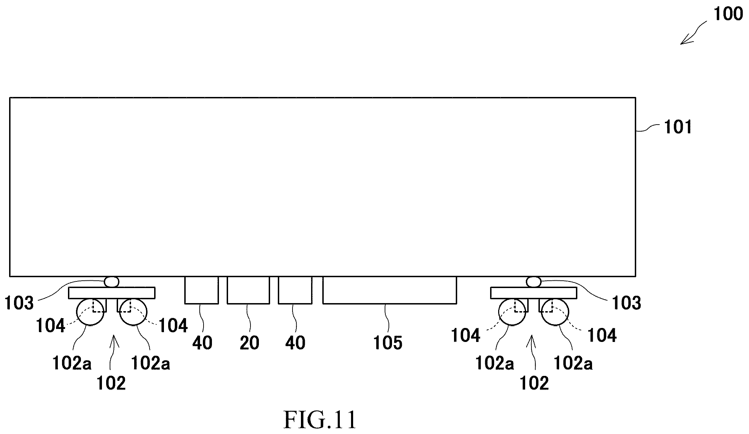

FIG. 11 is a schematic side view of the movable body according to Modified Example 1. A movable body 100 according to Modified Example 1 is not a low-floor car but a motor car that is a typical high-floor car. In the above embodiment, the electric power generating units 40 and the fuel supply unit 20 are located above the roof 8 of the carbody 5. However, in Modified Example 1, the electric power generating units 40 and the fuel supply unit 20 are located under the floor of a carbody 101.

Specifically, the motor car 100 that is the movable body of Modified Example 1 includes the carbody 101 and a pair of bogies 102. The pair of bogies 102 are respectively located close to both longitudinal-direction end portions of the carbody 101 and support the carbody 101. A bolster spring 103 is located between the carbody 101 and each bogie 102. Each bogie 102 includes wheels 102a.

Moreover, at least one electric motor 104 that is an advancing power generator is fixed to the bogie 102. Each electric motor 104 rotates the corresponding wheel 102a. The motor car 100 may adopt a carbody-mounted Cardan driving system. To be specific, the electric motor 104 may be fixed to the carbody 101.

At least one electric power generating unit 40, at least one fuel supply unit 20, and underfloor equipment 105 are fixed to an underfloor portion of the carbody 101 so as to be located between the pair of bogies 102 in the car longitudinal direction. Moreover, the underfloor equipment 105 includes the electric power collecting circuitry 12, the electric power storing body 13, the inverter 14, and the like which are described in the above embodiment.

Modified Example 1 can obtain effects similar to the effects of the above embodiment.

### Modified Example 2

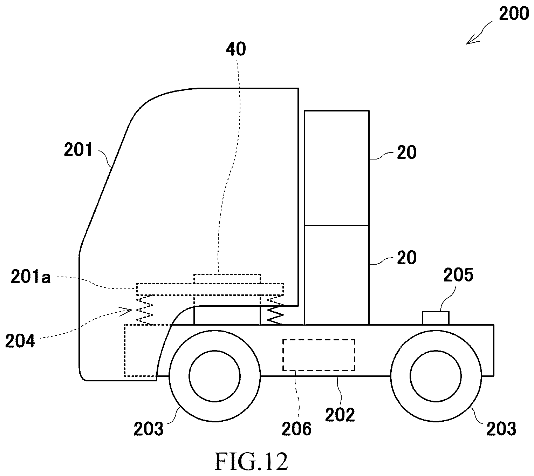

FIG. 12 is a schematic side view of the movable body according to Modified Example 2. A movable body 200 according to Modified Example 2 is a tractor (which may also be referred to as a tractor head or a trailer head) 200 that can tow a trailer. The tractor 200 and the trailer towed by the tractor 200 constitute a semi-trailer vehicle.

The tractor 200 includes: a cabin 201 including a driver's seat; and a chassis (which is also referred to as a carbody frame) 202 that supports the cabin 201. The chassis 202 has, for example, a ladder shape extending in the front-rear direction. Wheels 203 are assembled to the chassis 202 through suspensions. The cabin 201 is connected to the chassis 202 through buffer equipment 203. More specifically, the cabin 201 includes a pair of cabin frames 201a that are spaced apart from each other in the car width direction. The pair of cabin frames 201a are connected to the chassis 202 through the buffer equipment 203. The buffer equipment 203 suppresses the transmission of the vibration of the chassis 202 to the cabin 201. The buffer equipment 203 includes, for example, air springs. A coupler 205 coupled to the trailer is located at a rear portion of the chassis 202.

The tractor 200 includes: an electric motor 206 that is the advancing power generator; at least one electric power generating unit 40; and at least one fuel supply unit 20. The electric motor 206 is fixed to the chassis 202. An output shaft of the electric motor 206 is coupled to driving wheels among the wheels 203 through a power transmitting structure. FIG. 12 shows that the electric motor 206 is located between a front wheel and a rear wheel in the front-rear direction. However, the position of the electric motor 206 is not limited to this.

The at least one electric power generating unit 40 is fixed to a front portion of the chassis 202. The at least one electric power generating unit 40 is located under the driver's seat of the cabin 201. At least one electric power generating unit 40 may be connected to the chassis 202 through the elastic bodies 71 described in the above embodiment.

The at least one fuel supply unit 20 is fixed to the chassis 202 so as to be located behind the cabin 201 and in front of the coupler 205. In the example shown in FIG. 12, two fuel supply units 20 are fixed to the chassis 202 so as to be stacked on each other in the upper-lower direction. However, the tractor 200 does not have to include the fuel supply unit 20. For example, a hydrogen bomb that supplies hydrogen fuel to the electric power generating unit 40 may be located at the chassis 202 or the cabin 201.

Modified Example 2 can obtain effects similar to the effects of the above embodiment. The movable body 200 does not have to be a tow car and may be a cargo truck in which a cargo is mounted on a rear portion of the chassis 202.

### Other Embodiments

The foregoing has described the embodiment, and modifications, deletions, and additions may be made with respect to the above configuration within the scope of the present disclosure.

For example, in the above embodiment, the train set 1 including the track cars 2 is described as the movable body. In Modified Examples 1 and 2, the high-floor car and the tractor are described as the movable bodies. However, the movable body is not limited to these.

For example, the movable body may be one track car. The track car may be a low-floor car or a high-floor car. Moreover, the movable body is not limited to the track car and may be another type of land movable body including a driving wheel. For example, instead of the track car, the land movable body may be a car, such as a caterpillar, a LTV (Light Tactical Vehicle), a truck, or a bus, which includes four or more wheels, or may be a utility vehicle, a motorcycle, a PTV (Personal Transport Vehicle), or the like. Moreover, the movable body may be a water movable body including propulsion equipment, an underwater movable body including propulsion equipment, or an air movable body that flies in the air. Examples of the water movable body includes a ship, a tanker, and a personal watercraft. One example of the underwater movable body is an underwater vehicle. Examples of the air movable body include an aircraft, a helicopter, and a drone. The rotating body may be a propeller.

The configuration of the fuel supply unit 20 is not limited to that described in the above embodiment. For example, the fuel supply unit 20 does not have to include at least one of the component 24, 25, 26, 31, 32, 33, 34, or 35 or does not have to include the components 24, 25, 26, 31, 32, 33, 34, and 35. For example, the number of fuel tanks included in the fuel supply unit does not have to be two and may be one or three or more.

Moreover, the fuel supply unit 20 does not have to include the fuel tanks 21 and 22. For example, the fuel tanks 21 and 22 may be fixed to a member of the movable body main body without through the support structural body 27 of the fuel supply unit 20. The fuel supply unit 20 may include the support structural body 27, the supply pipe 23 supported by the support structural body 27, and the like. When the fuel supply unit does not include the fuel tank, the fuel tank cannot be replaced by the work of replacing the fuel unit. However, the ease of maintenance of the supply pipe that supplies the fuel can be improved. For example, the supply pipe of the fuel supply unit which has been separated from the movable body main body can be subjected to a leak check. Thus, the maintenance work is easily performed.

The configuration of the electric power generating unit 40 is not limited to that described in the above embodiment. For example, the electric power generating unit 40 does not have to include at least one of the component 44, 45, 46, 47, 51, 52, 53, 54, 55, 56, 57, or 58 or does not have to include the components 44, 45, 46, 47, 51, 52, 53, 54, 55, 56, 57, and 58. For example, in the above embodiment, the electric power generating unit 40 includes the cooling medium pump 56. However, the cooling medium pump 56 may be located at the carbody 5 so as to be located outside the electric power generating unit 40. The electric power generating unit may include the electric power storing body. The internal combustion engine may use fuel other than the hydrogen gas. For example, the internal combustion engine may drive by gas fuel, such as the hydrogen gas, or may drive by existing liquid fuel, such as gasoline. Regarding a specific structure of the internal combustion engine, i.e., regarding the layout, the number of cylinders, and the cam structure, a known technology is suitably applicable. For example, in the case of a hydrogen engine that uses the hydrogen gas as the fuel, the hydrogen engine may include a supercharger with an intake/exhaust valve or may be a two-stroke engine.

The electric power generating unit and the fuel supply unit may constitute a single unit. To be specific, one of the electric power generating unit and the fuel supply unit may include all the components of the other unit.

The number of electric power generating units included in the movable body, the number of fuel supply units included in the movable body, and the arrangement of the electric power generating units and the fuel supply units are not limited to those described in the above embodiment. The movable body does not have to include the fuel supply unit. For example, only one electric power generating unit may be mounted on the movable body, or two or more electric power generating units may be mounted on the movable body. When the electric power generating units are mounted on the movable body, the outputs of the electric power generating units may be electrically connected to each other in parallel or in series. Moreover, there may be groups in each of which the outputs of the electric power generating units are connected to each other in series, and the outputs of the groups may be connected to each other in parallel.

A method of fixing the support structural body to the movable body is not limited to that described in the above embodiment. For example, a buffer member, specifically a damper member, which prevents transmission of impact and vibration generated at the movable body, may be located between the support structural body and the movable body.

The shapes and structures of the support structural bodies 27 and 48 are not limited to those described in the above embodiment. The support structural body 27 of the fuel supply unit 20 does not have to have a box shape. For example, as with the support structural body 48 of the support structural body 27, the electric power generating unit 40 may include frames. The support structural body 48 of the electric power generating unit 40 does not have to include the frames shown in FIG. 3. For example, the support structural body 48 may have a box shape as with the support structural body 27 of the fuel supply unit 20.

In the support structural body 48, any structure can be adopted as each of support structures of the respective components of the electric power generating unit 40 as long as the components of the electric power generating unit 40 serve as a single module. For example, the support structural body of the electric power generating unit may be a structure that supports at least the internal combustion engine, the electric power generator, and the power transmitting structure that transmits the power from the internal combustion engine to the electric power generator. In other words, the support structural body may be configured such that a protection function to protect the components from peripheral parts is partially omitted. The assembling accuracy of the internal combustion engine, the electric power generator, and the power transmitting structure that couples the internal combustion engine and the electric power generator is required. When the internal combustion engine, the electric power generator, and the power transmitting structure are fixed to a common frame, fine adjustment of a relative positional relation among the internal combustion engine, the electric power generator, and the power transmitting structure after the internal combustion engine, the electric power generator, and the power transmitting structure are attached to the movable body is easily omitted. Moreover, regarding electric connection for signals, electric power, and the like and fluid connection for fuel, air, cooling liquid, and the like, the ease of connecting work is higher than that of power connection. Therefore, even when the electric power generating unit is located separately from components related to the electric connection and the fluid connection, influence regarding the maintenance is small.

The electric power generating unit mounted on the movable body and the electric power generating unit not mounted on the movable body may be the same in configuration as each other or may be different in configuration from each other. It is preferable that the electric power generating unit mounted on the movable body and the electric power generating unit (already-maintained unit) for replacement not mounted on the movable body be the same in configuration as each other such that the electric power generating unit mounted on the movable body is easily replaced with the electric power generating unit not mounted on the movable body. It is preferable that when the electric power generating units are mounted on the movable body, the electric power generating units be the same in configuration as each other. For example, the support structural bodies of the electric power generating units are common in structure to each other. Moreover, for example, the internal combustion engines of the electric power generating units may be common in structure to each other, and the electric power generators of the electric power generating units may be common in structure to each other.

It is preferable that when the electric power generating units are mounted on the movable body, the total electric power that can be generated by the electric power generating units, the number of which is smaller than the number of all electric power generating units mounted on the movable body by a predetermined number (for example, two or more), be larger than the electric power necessary to advance the movable body. The electric power necessary to advance the movable body may be electric power necessary at the start of the movable body. Thus, even when there is an abnormality in the electric power generating units, the number of which is not more than the predetermined number, among the electric power generating units mounted on the movable body, the movable body can continuously move. To be specific, the stop of the movement of the movable body by the failures of some of the electric power generating units mounted on the movable body can be prevented.

Moreover, the maintenance method is not limited to that described in the above embodiment. For example, the above embodiment describes that as the maintenance work, the units 20 and 40 are detached from all the movable bodies, and then, the maintenance targets other than the units 20 and 40 are subjected to the maintenance work. However, the maintenance method is not limited to this. When the maintenance target included in the movable body is only the electric power generating unit, the maintenance method does not have to include the maintenance of the portions other than the electric power generating unit. To be specific, the maintenance may be completed by replacing the not-yet-maintained unit with the already-maintained unit.

The functionality of the components disclosed herein may be implemented using circuitry or processing circuitry which includes general purpose processors, special purpose processors, integrated circuits, ASICs ("Application Specific Integrated Circuits"), conventional circuitry or any combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware or processor.

### Disclosed Aspects

The following aspects disclose preferred embodiments.

### First Aspect

A movable body including:
a rotating body that generates advancing power;
a movable body main body that rotatably supports the rotating body;
an electric motor that is supplied with electric power to rotate the rotating body; and
at least one electric power generating unit including
an internal combustion engine,
an electric power generator that generates the electric power by an output of the internal combustion engine, and
a support structural body that supports the internal combustion engine and the electric power generator and is attachable to and detachable from the movable body main body while keeping supporting both of the internal combustion engine and the electric power generator.

According to the above configuration, the internal combustion engine and the electric power generator are supported by the support structural body and are integrated as the electric power generating unit. Therefore, the internal combustion engine and the electric power generator are integrally attachable to and detachable from the movable body main body.

Moreover, according to the present configuration, when the electric energy output from the electric power generator is transmitted to the electric motor through, for example, an electric cable, and the support structural body is attached to or detached from the movable body main body, the electric cable as the energy supply passage is attached or detached. To be specific, according to the above configuration, the internal combustion engine and the electric power generator are more easily attached to and detached from the movable body main body than the movable body in which the mechanical energy output from the internal combustion engine is directly transmitted to the rotating body through the power transmitting structure. Therefore, when subjecting the internal combustion engine and the electric power generator to the maintenance work, the electric power generating unit mounted is replaced with the electric power generating unit which has already been subjected to the maintenance work, and this can facilitate the restart of the activity of the movable body.

### Second Aspect

The movable body according to the first aspect, wherein the electric power generating units are mounted on the movable body main body.

According to the above configuration, the electric power generating units are included. Therefore, even when there is an abnormality in at least one of the electric power generating units, the other electric power generating units can continue the supply of the electric power. Thus, the stop of the supply of the electric power is easily prevented.

### Third Aspect

The movable body according to the second aspect, wherein the support structural bodies of the electric power generating units are common in structure to each other.

According to the above configuration, the work of replacing the electric power generating unit attached to the movable body with another electric power generating unit can be facilitated.

### Fourth Aspect

The movable body according to the second or third aspect, wherein total electric power generated by the electric power generating units, the number of which is obtained by subtracting a predetermined number from the number of all electric power generating units, is set larger than electric power necessary to advance the movable body.

According to the above configuration, even when there is an abnormality in at least one of the electric power generating units, the movable body can continuously advance by the supply of the electric power from the other electric power generating units.

### Fifth Aspect

The movable body according to any one of the first to fourth aspects, wherein the electric power generating unit further includes unit control circuitry that is supported by the support structural body and controls the internal combustion engine and the electric power generator.

According to the above configuration, the unit control circuitry is also supported by the support structural body. Therefore, when the electric power generating unit is detached from the movable body main body, not only the internal combustion engine and the electric power generator but also the unit control circuitry can be subjected to the maintenance. Thus, maintenance and inspection items can be increased, and this can improve reliability. In other words, the maintenance work of the portions of the movable body other than the electric power generating units can be reduced more than when the unit control circuitry is attached to not the electric power generating unit but the movable body main body, and this can bring forward the restart of the activity of the movable body.

### Sixth Aspect

The movable body according to any one of the first to fifth aspects, wherein the electric power generating unit further includes a circulator that is supported by the support structural body and circulates a circulating liquid in at least the internal combustion engine.

According to the above configuration, the circulator is also supported by the support structural body. Therefore, when the electric power generating unit is detached from the movable body main body, not only the internal combustion engine and the electric power generator but also the circulator can be subjected to the maintenance. Thus, the maintenance and inspection items can be increased, and this can improve reliability. In other words, the maintenance work of the portions of the movable body other than the electric power generating units can be reduced more than when the circulator is attached to not the electric power generating unit but the movable body main body, and this can bring forward the restart of the activity of the movable body.

### Seventh Aspect

The movable body according to any one of the first to sixth aspects, wherein the electric power generating unit further includes a fluid energy outlet that is supported by the support structural body and outputs fluid energy obtained by driving of the internal combustion engine,
the movable body further including a fluid pipe that is connectable to the fluid energy outlet.

According to the above configuration, since the fluid pipe of the movable body main body is connectable to the fluid energy outlet of the electric power generating unit, the fluid energy output from the internal combustion engine can be transmitted to the movable body main body through the fluid pipe. Connection of the fluid pipe through which the fluid energy is transmitted is easier than that of a connection member through which the mechanical energy is transmitted. Therefore, the energy from the internal combustion engine can be easily taken out while facilitating the attaching and detaching of the electric power generating unit to and from the movable body main body.

### Eighth Aspect

The movable body according to any one of the first to seventh aspects, wherein the internal combustion engine uses a hydrogen gas as fuel.

According to the above configuration, the amount of toxic substances contained in the exhaust discharged from the internal combustion engine which uses the hydrogen gas as the fuel is smaller than that contained in the exhaust discharged from the internal combustion engine which uses hydrocarbon as the fuel. Thus, even when a purifier that purifies the toxic substances is supported by the support structural body, the electric power generating unit is easily prevented from increasing in size.

### Ninth Aspect

The movable body according to any one of the first to eighth aspects, wherein the support structural body is a first support structural body,
the movable body further including at least one fuel supply unit including
a supply pipe through which fuel is supplied from a fuel tank that stores the fuel and
a second support structural body that supports the fuel tank and the supply pipe and is attachable to and detachable from the movable body main body while keeping supporting both of the fuel tank and the supply pipe.

According to the above configuration, the ease of maintenance of the supply pipe that supplies the fuel can be improved. When the fuel supply unit is detachably fixed to the movable body main body in, for example, a space above the ceiling of the movable body main body or a space under the floor of the movable body main body, the maintenance and inspection of the components included in the fuel supply unit are facilitated. For example, the supply pipe of the fuel supply unit which has been separated from the movable body main body can be subjected to a leak check. Thus, the maintenance work is easily performed.

### Tenth Aspect

The movable body according to the ninth aspect, wherein the fuel supply unit further includes the fuel tank.

According to the above configuration, when the amount of fuel stored in the fuel tank is small, or when the fuel tank is empty, the fuel supply unit can be replaced with another fuel supply unit including the fuel tank that adequately stores the fuel. Therefore, the fuel can be supplied to the movable body in a shorter period of time than when the fuel is supplied to the fuel tank fixed to the movable body main body.

### Eleventh Aspect

The movable body according to any one of the first to tenth aspects, wherein:
the movable body is a vehicle in and out of which an occupant gets on land;
the movable body main body further includes a roof located above an accommodating space that accommodates the occupant; and
the support structural body is located above the accommodating space.

According to the above configuration, the floor surface of the accommodating space can be easily located at a lower position than when the support structural body is located lower than the accommodating space. For example, since the floor surface can be located at the lower position, the accommodating space can be made large, or a level difference that an occupant passes through when getting in or out of the car from an outside can be reduced.

### Twelfth Aspect

The movable body according to the eleventh aspect, wherein:
the rotating body includes a wheel that supports the movable body main body; and
the movable body includes a low-floor car that includes a floor surface of the accommodating space, the floor surface being lower than an upper end of the wheel.

### Thirteenth Aspect

The movable body according to any one of the first to twelfth aspects, wherein:
the rotating body includes a wheel that supports the movable body main body; and
the electric power generating unit is located lower than an upper end of the wheel.

### Fourteenth Aspect

The movable body according to any one of the first to thirteenth aspects, wherein the movable body main body includes a cooling structure that utilizes traveling wind to cool at least one of the internal combustion engine or the electric power generator.

According to the above configuration, equipment that cools the electric power generating unit can be saved.

### Fifteenth Aspect

The movable body according to any one of the first to fourteenth aspects, further including at least one piece of control circuitry that controls at least one of the internal combustion engine or the electric power generator based on information indicating a use state of the electric power by at least one of the movable body main body or the electric motor.

According to the above configuration, the electric power generation efficiency can be improved in accordance with the use state of the electric power and the like.

### Sixteenth Aspect

The movable body according to any one of the first to sixteenth aspects, further including an electric power storing body that stores the electric power generated by the electric power generator.

According to the above configuration, the electric power generated by the electric power generator is temporarily stored in the electric power storing body and can be efficiently utilized.

### Seventeenth Aspect

A maintenance method of maintaining a movable body,
the movable body including:
a movable body main body;
an electric motor for advancing; and
a unit including an internal combustion engine and an electric power generator that generates electric power by an output of the internal combustion engine,
the maintenance method including:
   detaching from the movable body a not-yet-maintained unit that is the unit mounted on the movable body;
   attaching an already-maintained unit to the movable body, the already-maintained unit being different from the not-yet-maintained unit and being the unit which has already been subjected to maintenance; and
   terminating maintenance work of the movable body.

Moreover, the portions of the movable body other than the not-yet-maintained unit may be subjected to the maintenance. Furthermore, when the maintenance work of the portions of the movable body other than the not-yet-maintained unit and the work of attaching the already-maintained unit to the movable body are completed, the maintenance work of the movable body may be terminated regardless of whether or not the maintenance of the not-yet-maintained unit has been completed.

According to the above method, since the not-yet-maintained unit mounted on the movable body is replaced with the already-maintained unit, the maintenance work of the movable body can be completed without waiting for the completion of the maintenance work of the not-yet-maintained unit. This facilitates the restart of the activity of the movable body.

The foregoing may include the following features.

The electric power generating unit is mounted on the movable body such that there is a gap between the internal combustion engine and the movable body main body. According to this configuration, the heat transfer from the internal combustion engine to the movable body main body can be suppressed.

Various interfaces, such as the electric interface, the communication interface, and the fluid interface (the fuel receiving port 42a, the oil port 55, etc.), which are included in the electric power generating unit may be located so as to be directed in a direction intersecting with a direction in which the units are lined up. According to this configuration, even when the electric power generating units are lined up, harnesses and hoses are easily connected.

The movable body main body may include collecting circuitry that collects the electric power supplied from each electric power generator.

The integration ECU may determine whether or not the state information of the electric power generating unit which has been received from the electric power ECU satisfies a predetermined judgment condition. When the integration ECU determines that the state information satisfies the predetermined judgment condition, the integration ECU may transmit to the electric power ECU a command that stops the supply of the electric power from the electric power generating unit or reduces the amount of electric power supplied from the electric power generating unit. Or, when the integration ECU determines that the state information satisfies the predetermined judgment condition, the integration ECU may make the informer, such as a display mounted on the movable body main body, inform of the necessity of the inspection of the electric power generating unit.

The movable body may be a track car including wheels that roll on rails. The movable body may be a train set including track cars connected to each other in series.

The electric power generating units may be lined up in a proceeding direction of the car.

In the movable body including the at least one fuel supply unit, the movable body main body may be a vehicle. The movable body may further include a roof located above an accommodating space that accommodates an occupant. The second support structural body of the fuel supply unit may be located above the accommodating space.

## Claims

1. A movable body comprising:
a rotating body that generates advancing power;
a movable body main body that rotatably supports the rotating body;
an electric motor that is supplied with electric power to rotate the rotating body; and
at least one electric power generating unit including
an internal combustion engine,
an electric power generator that generates the electric power by an output of the internal combustion engine, and
a support structural body that supports the internal combustion engine and the electric power generator and is attachable to and detachable from the movable body main body while keeping supporting both of the internal combustion engine and the electric power generator.

2. The movable body according to claim 1, wherein the electric power generating units are mounted on the movable body main body.

3. The movable body according to claim 2, wherein the support structural bodies of the electric power generating units are common in structure to each other.

4. The movable body according to claim 2 or 3, wherein total electric power generated by the electric power generating units, the number of which is obtained by subtracting a predetermined number from the number of all electric power generating units, is set larger than electric power necessary to advance the movable body.

5. The movable body according to claim 1 or 2, wherein the electric power generating unit further includes unit control circuitry that is supported by the support structural body and controls the internal combustion engine and the electric power generator.

6. The movable body according to claim 1 or 2, wherein the electric power generating unit further includes a circulator that is supported by the support structural body and circulates a circulating liquid in at least the internal combustion engine.

7. The movable body according to claim 1 or 2, wherein the electric power generating unit further includes a fluid energy outlet that is supported by the support structural body and outputs fluid energy obtained by driving of the internal combustion engine,
the movable body further comprising a fluid pipe that is connectable to the fluid energy outlet.

8. The movable body according to claim 1 or 2, wherein the internal combustion engine uses a hydrogen gas as fuel.

9. The movable body according to claim 1 or 2, wherein the support structural body is a first support structural body,
the movable body further comprising at least one fuel supply unit including
a supply pipe through which fuel is supplied from a fuel tank that stores the fuel and
a second support structural body that supports the fuel tank and the supply pipe and is attachable to and detachable from the movable body main body while keeping supporting both of the fuel tank and the supply pipe.

10. The movable body according to claim 9, wherein the fuel supply unit further includes the fuel tank.

11. The movable body according to claim 1 or 2, wherein:
the movable body is a vehicle in and out of which an occupant gets on land;
the movable body main body further includes a roof located above an accommodating space that accommodates the occupant; and
the support structural body is located above the accommodating space.

12. The movable body according to claim 11, wherein:
the rotating body includes a wheel that supports the movable body main body; and
the movable body includes a low-floor car that includes a floor surface of the accommodating space, the floor surface being lower than an upper end of the wheel.

13. The movable body according to claim 1 or 2, wherein:
the rotating body includes a wheel that supports the movable body main body; and
the electric power generating unit is located lower than an upper end of the wheel.

14. The movable body according to claim 1 or 2, wherein the movable body main body includes a cooling structure that utilizes traveling wind to cool at least one of the internal combustion engine or the electric power generator.

15. The movable body according to claim 1 or 2, further comprising at least one piece of control circuitry that controls at least one of the internal combustion engine or the electric power generator based on information indicating a use state of the electric power by at least one of the movable body main body or the electric motor.

16. The movable body according to claim 1 or 2, further comprising an electric power storing body that stores the electric power generated by the electric power generator.

17. A maintenance method of maintaining a movable body,
the movable body including:
a movable body main body;
an electric motor for advancing; and
a unit including an internal combustion engine and an electric power generator that generates electric power by an output of the internal combustion engine,
the maintenance method comprising:
detaching from the movable body a not-yet-maintained unit that is the unit mounted on the movable body;
attaching an already-maintained unit to the movable body, the already-maintained unit being different from the not-yet-maintained unit and being the unit which has already been subjected to maintenance; and
terminating maintenance work of the movable body.
